# FASCICULE DE BREVET EUROPEEN

(11) **EP 3 947 154 B1**
(45) Date de publication et mention de la délivrance du brevet: **24.07.2024**
(21) Numéro de dépôt: 20728114.8
(22) Date de dépôt: 19.03.2020
(51) Int. Cl.: B64D 33/02, F02C 7/04, B64D 29/00

(54) **MANCHE D'ENTREE D'AIR POUR UNE NACELLE D'UN ENSEMBLE PROPULSIF D'AERONEF**
LUFTEINLASSHÜLSE FÜR EINE GONDEL EINER ANTRIEBSEINHEIT EINES FLUGZEUGS
AIR INLET SLEEVE FOR A NACELLE OF A PROPULSION SYSTEM OF AN AIRCRAFT

(30) Priorité: 02.04.2019 FR 1903499
(43) Date de publication de la demande: 09.02.2022
(73) Titulaire: SAFRAN AIRCRAFT ENGINES, 75015 Paris (FR)
(72) Inventeur: GARNAUD, Quentin, Matthias, Emmanuel, 77550 MOISSY-CRAMAYEL (FR); HELLEGOUARCH, Antoine, Elie, 77550 MOISSY-CRAMAYEL (FR); SIRVIN, Nicolas, Joseph, 77550 MOISSY-CRAMAYEL (FR)
(74) Mandataire: Gevers & Orès
(86) Numéro de dépôt international: PCT/FR2020/050594
(87) Numéro de publication internationale: WO 2020/201658

(56) Documents cités:
- US-A- 3 400 902
- US-A- 4 047 911
- US-A1- 2010 084 507
- US-A1- 2014 127 001

## Description

### Domaine technique de l'invention

L'invention se rapporte au domaine de l'aéronautique, et plus particulièrement, à une manche d'entrée d'air pour une nacelle d'un ensemble propulsif d'aéronef.

### Arrière-plan technique

L'état de la technique comprend notamment les documents US-A-3400902, US-A-4047911 et US-2014/127001.

Un ensemble propulsif comprend un moteur du type turbomachine qui est entouré par une nacelle. Dans le cas où la turbomachine est un turboréacteur à double flux, le flux d'air qui passe dans la manche d'entrée d'air traverse un aubage de soufflante puis se divise en un flux d'air primaire qui pénètre dans la turbomachine et en un flux d'air secondaire qui s'écoule autour de la turbomachine.

La nacelle comprend une manche d'entrée d'air, une structure médiane et une structure aval toutes reliées entre elles de manière à former une veine d'écoulement du flux d'air secondaire.

La manche d'entrée d'air comprend, d'une part une lèvre d'entrée d'air agencée pour permettre la captation optimale de l'air nécessaire à l'alimentation du moteur, et ce, sur l'ensemble de sa plage de fonctionnement, tout en minimisant pertes et trainée, et d'autre part un corps sur lequel la lèvre est accolée et qui est destiné à canaliser convenablement l'air vers l'aubage de soufflante.

Les demandes FR2936492A1 et FR2938237A1 décrivent de telles manches d'entrée d'air dont les lèvres sont accolées aux corps lorsque l'aéronef se déplace mais sont configurées pour s'écarter du corps lorsque l'aéronef se trouve au sol afin de faciliter la maintenance de la nacelle.

A faible vitesse (par exemple au sol, durant le décollage ou l'atterrissage), des conditions défavorables comme des angles d'attaque élevés de l'aéronef ou un vent de travers (c'est-à-dire un vent non parallèle à un axe longitudinal de la nacelle) peuvent entrainer une réduction du débit d'air capté par la manche d'entrée d'air. Or, maintenir ce débit au-dessus d'un seuil limite est primordial pour ne pas nuire à l'opérabilité du moteur et générer des limitations d'utilisation de ce dernier.

En outre, la tendance actuelle est de réduire la longueur des nacelles et par conséquent des manches d'entrées d'air, ce qui diminue leur capacité de captation de l'air, en particulier dans les conditions défavorables décrites précédemment.

La présente invention permet de remédier au problème précité, de manière simple, efficace et économique.

### Résumé de l'invention

L'invention propose à cet effet une manche d'entrée d'air pour une nacelle d'un ensemble propulsif selon la revendication 1.

Ainsi, en prévoyant d'une part un écartement entre la lèvre et le corps et d'autre part d'y insérer des grilles, l'invention permet à un flux d'air transversal d'entrer dans la nacelle par cet écartement avant d'être redressé en traversant les grilles dans une direction optimisée. La direction du flux d'air transversal après avoir été redressé par les grilles peut notamment être choisie pour réduire les risque de décollement d'air dans la manche d'entrée d'air et donc pour réduire les risques de distorsion du flux d'air alimentant la turbomachine et sa soufflante. Ce redressement permet en outre de mieux répartir le flux d'air transversal entrant dans le moteur et donc d'augmenter sa surface de captation d'air. L'invention permet ainsi d'éviter que des parties du moteur, notamment périphériques (c'est-à-dire situées proche de la nacelle) ne soient pas ou peu traversées par le flux d'air.

La manche d'entrée d'air selon l'invention permet ainsi d'augmenter le débit du flux d'air capté par la manche d'entrée d'air, de mieux le diriger et d'améliorer sa répartition à l'intérieur de la nacelle, en particulier dans les conditions défavorables décrites précédemment. Le moteur gagne ainsi en performance et en opérabilité. En outre, l'invention présente l'avantage de permettre aux grilles d'être logées dans le corps sans modifier la structure externe de la lèvre.

La manche d'entrée d'air selon l'invention peut comprendre une ou plusieurs des caractéristiques ci-dessous, prises isolément les unes avec les autres ou en combinaison les unes avec les autres :
- ledit système de commande comprend au moins un vérin orienté sensiblement parallèlement à un axe longitudinal de la manche d'entrée d'air,
- les deux parois annulaires coaxiales sont reliées entre elles par une paroi annulaire transversale de renfort, et
- la paroi de renfort définit avec les parois interne et externe un compartiment annulaire de réception parcouru par une canalisation de circulation d'un fluide de dégivrage de la lèvre.

L'invention concerne encore un ensemble propulsif d'aéronef comportant une nacelle équipée d'une manche telle que décrite ci-dessus.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique en coupe axiale d'un ensemble propulsif d'aéronef ;
[Fig. 2] la figure 2 est une vue en perspective d'une manche d'entrée d'air dans une première position ;
[Fig. 3] la figure 3 est une vue en perspective de la manche d'entrée d'air de la figure 2 dans une seconde position ;
[Fig. 4] la figure 4 est une demi-vue schématique, en coupe axiale, de la manche d'entrée d'air dans la première position ; et
[Fig. 5] la figure 5 est une demi-vue schématique, en coupe axiale, de la manche d'entrée d'air dans la seconde position.

### Description détaillée de l'invention

Un ensemble propulsif 10 comprend un moteur ou une turbomachine qui est entouré par une nacelle 26.

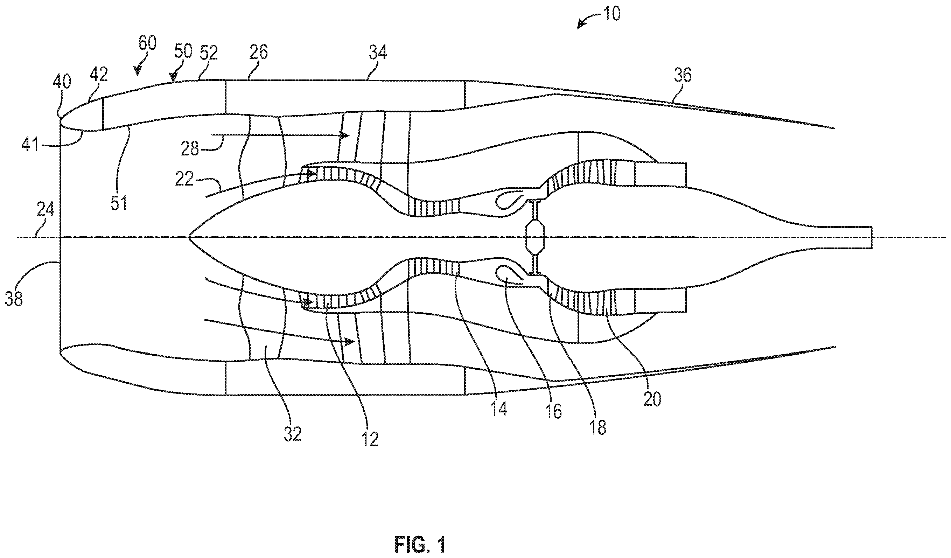

En référence à la figure 1, la turbomachine est un turboréacteur à double flux qui comporte, de l'amont vers l'aval selon la direction d'écoulement des gaz, un compresseur basse pression (BP) 12, un compresseur haute pression (HP) 14, une chambre annulaire de combustion 16, une turbine haute pression (HP) 18 et une turbine basse pression (BP) 20, qui définissent une veine d'écoulement d'un flux primaire de gaz 22.

Le rotor de la turbine haute pression 18 est solidaire du rotor du compresseur haute pression 14 de manière à former un corps haute pression, tandis que le rotor de la turbine basse pression 20 est solidaire du rotor du compresseur basse pression 12 de manière à former un corps basse pression. Le rotor de chaque turbine entraîne en rotation le rotor du compresseur associé autour d'un axe longitudinal 24 sous l'effet de la poussée des gaz provenant de la chambre de combustion 16.

Dans la description qui suit, les termes amont et aval font référence à l'écoulement des gaz dans la turbomachine, le long de l'axe longitudinal 24, et les termes amont, aval, radial, transversal, etc., doivent être considérés comme étant définis par rapport à cet axe longitudinal 24 ou faisant référence à cet axe longitudinal 24.

La nacelle 26 comprend, de l'amont vers l'aval, une manche d'entrée d'air 60, une structure médiane 34 et une structure aval 36 reliées entre elles de manière à s'étendre autour de la turbomachine et définir autour de celle-ci une veine annulaire d'écoulement d'un flux secondaire 28.

La manche d'entrée d'air 60 comprend une lèvre annulaire 40 d'entrée d'air adaptée pour permettre la captation optimale de l'air nécessaire à l'alimentation d'une soufflante 32 de la turbomachine. Cet air se divise ensuite pour former les flux primaire 22 et secondaire 28 précités.

La lèvre 40 définit une entrée transversale 38 de la nacelle 26 permettant à l'air de rentrer dans la nacelle. Cette lèvre 40 comporte deux parois annulaires 41, 42 coaxiales par rapport à l'axe longitudinal 24, respectivement interne 41 et externe 42.

La paroi interne 41 définie une partie d'une surface annulaire interne de la manche d'entrée d'air 60 permettant de capter les flux d'air et de les guider vers la soufflante 32. La paroi interne 41 fait ainsi partie de la veine annulaire de la nacelle. La paroi externe 42 définit en revanche une partie d'une surface annulaire externe de la manche d'entrée d'air 60.

La manche d'entrée d'air 60 comprend également un corps annulaire 50 comprenant une paroi interne de corps 51 et une paroi externe de corps 52. La paroi interne de corps 51 définie une autre partie de la surface annulaire interne de la manche d'entrée d'air 60 et permet donc de guider le flux d'air entrant dans la nacelle 26 depuis la lèvre 40 vers la soufflante 32. Tout comme la paroi interne 41 de la lèvre 40, la paroi interne de corps 51 fait partie de la veine d'écoulement annulaire de la nacelle 26. La paroi externe de corps 52 définit en revanche une autre partie de la surface annulaire externe de la manche d'entrée d'air 60.

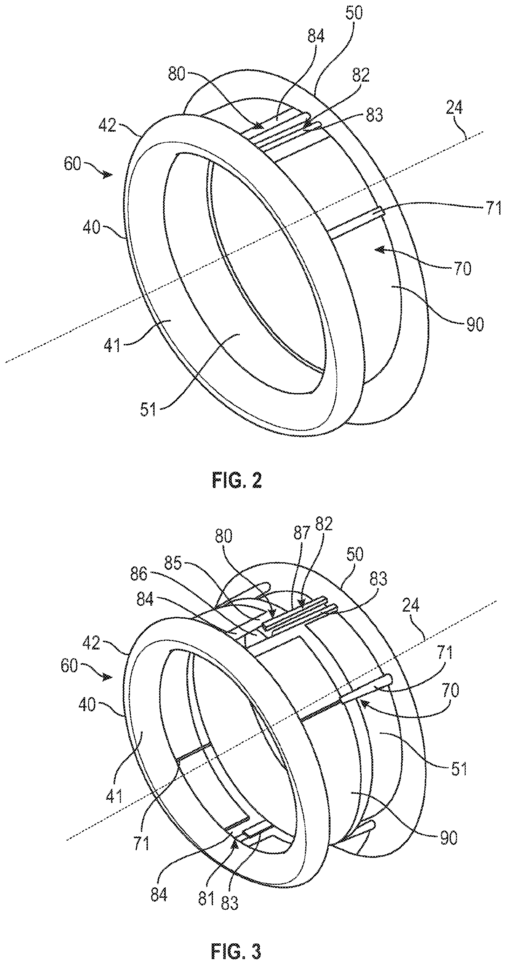

La figure 2 représente la manche d'entrée d'air 60 selon l'invention comprenant le corps annulaire 50 et la lèvre annulaire 40 d'entrée d'air comme décrit précédemment. Sur cette figure ainsi que sur la figure 3, la paroi externe de corps du corps 50 n'est pas représentée pour faciliter l'exposé de l'invention.

La manche d'entrée d'air 60 comprend ici un système de commande 70 pour le déplacement en translation axiale de la lèvre 40 vis-à-vis du corps 50, c'est-à-dire parallèlement à l'axe longitudinal 24.

Le système de commande 70 est ainsi agencé pour déplacer la lèvre 40 d'une première position (figure 2), dans laquelle la lèvre 40 est accolée au corps 50, à une seconde position (figure 3) dans laquelle elle est éloignée axialement du corps 50.

Pour ce faire, le système de commande 70 comprend par exemple au moins un vérin 71, ici quatre vérins 71, notamment électriques ou hydrauliques. Ils sont en particulier orientés sensiblement parallèlement l'axe longitudinal 24 de la manche 60 d'entrée d'air de manière à pousser la lèvre 40 pour l'amener de la première position représentée à la figure 2 à la seconde position représentée à la figure 3 et de manière à pouvoir tirer la lèvre 40 dans le sens inverse.

La manche 60 de la figure 2 comprend en outre au moins un système de guidage 80 en translation de la lèvre 40 vis-à-vis du corps 50.

Le système de guidage 80 est ici du type à rail et glissière et comprend par exemple un système inférieur 81 et un système supérieur 82 comme visible à la figure 3. Les systèmes inférieur 81 et supérieur 82 comprennent chacun un rail 83 et une glissière 84. Le rail 83 est ici situé sur le corps 50, en particulier sur la paroi interne de corps 51 et la glissière sur la lèvre 40. Le rail 83 et la glissière 84 sont configurées pour guider la lèvre 40 parallèlement à l'axe longitudinal 24 lors de ses déplacements de la première position à la seconde position et vice-versa. La glissière 84 comprend deux bords 85 espacés entre eux de manière à définir un espace 86. Le rail 83 comprend deux profilés 87 en forme de U agencés pour être logés dans l'espace 86 dans la première position et libérer l'espace 86 dans la seconde position. Les bords 85 et les profilés 87 sont configurés pour autoriser le déplacement axial de la lèvre 40 par rapport au corps 50 et empêcher tout autre type de déplacement.

Lorsque la lèvre 40 se trouve dans la première position, elle est fixée de manière amovible au corps 50 par au moins une bride, par exemple située(s) sur la paroi interne 41 de la lèvre 40 et la paroi interne de corps 51 du corps 50 et/ou sur la paroi externe 42 de la lèvre 40 et la paroi externe de corps du corps 52.

Lors du passage de la lèvre de la deuxième position à la première position, le centrage de la lèvre 40 par rapport au corps, se fait notamment par l'intermédiaire d'un doigt de centrage situé sur un élément parmi la lèvre 40 et le corps 50 et d'un emplacement de forme complémentaire au doigt et aménagé sur l'autre des éléments parmi la lèvre 40 et le corps 50.

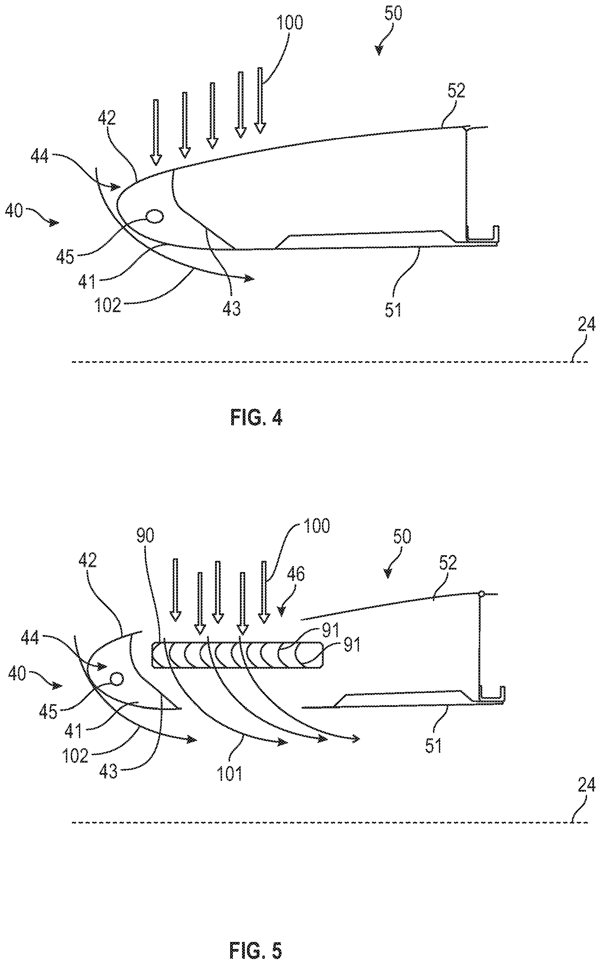

En faisant maintenant référence aux figures 4 (première position de la lèvre 40) et 5 (seconde position de la lèvre 40), lorsque la lèvre 40 est dans la première position, un flux d'air transversal 100 se dirigeant vers la manche d'entrée d'air 60 selon une direction transversale par rapport à l'axe longitudinal 24 est empêché d'entrer dans la nacelle, notamment par la paroi externe 42 de la lèvre et la paroi externe de corps 52. En revanche, lorsque la lèvre 40 est dans la seconde position, c'est-à-dire dans une position écartée du corps 50, une entrée latérale 46 est créée entre la lèvre 40 et le corps 50, et ce même flux d'air transversal 100 est alors libre d'entrer dans la manche d'entrée d'air 60 par l'entrée latérale 46. La translation longitudinale de la lèvre 40 par rapport au corps 50 permet ainsi d'augmenter le débit d'air capté par la manche d'entrée d'air 60 sans modifier la section de l'entrée transversale. Les flux d'air 102 entrant dans la nacelle par l'entrée transversale de la nacelle ne sont donc pas perturbés par l'invention.

La lèvre 40, comprend en outre une rangée annulaire de grilles 90. Cette rangée annulaire de grilles 90 est solidaire en translation avec la lèvre 40. Les grilles sont notamment configurées pour être, dans la première position (figure 4), logées dans le corps 50, et, dans la seconde position (figure 5), sorties du corps 50 et destinées à être traversées par le flux d'air transversal 100.

Les grillent 90 comprennent des ailettes 91 qui guident le flux d'air transversal 100 lorsqu'il pénètre dans la nacelle par l'intermédiaire de l'entrée latérale 46 selon une direction illustrée par les flèches référencées 101 sur la figure 5. L'invention permet ainsi de configurer les ailettes 91 de manière à optimiser la direction du flux d'air transversal 100 dans le but d'optimiser les performances du moteur.

Les grilles 90 interdisent l'entrée d'oiseaux dans la nacelle par l'intermédiaire de l'entrée latérale 46 et ont ainsi une fonction de protection anti-collusion d'oiseaux.

En revenant à la figure 3, la ou les glissières 84 sont notamment ménagées dans les grilles 90. Ainsi, lorsque la lèvre 40 est en seconde position, le flux d'air peut entrer dans la nacelle en traversant les grilles 90 et/ou en traversant la glissière 84, en particulier par l'espace 86.

L'invention est avantageuse pour tout type de nacelles et en particulier pour les nacelles de grandes sections transversales. En effet, plus le diamètre de la section transversale de la nacelle est élevé, plus la circonférence de la nacelle est importante, et plus l'entrée latérale 46 sera grande. L'effet de l'entrée latérale 46 sur le débit d'air entrant dans la nacelle est ainsi accentué sur des nacelles présentant de grande section transversale.

La lèvre 40 comprend par exemple une paroi annulaire transversale de renfort 43. Cette paroi de renfort 43 définit avec les parois interne 41 et externe 42 un compartiment annulaire 44 de réception parcouru par une canalisation 45 de circulation d'un fluide de dégivrage de la lèvre 40. L'invention permet ainsi d'être compatible avec un système de dégivrage efficace, évitant à la lèvre 40 qui est soumise directement aux conditions climatiques extérieures de givrer.

En cas de problème, la manche d'entrée d'air 60 restera en position normalement fermée, c'est-à-dire en première position.

## Revendications

1. Manche d'entrée d'air (60) pour une nacelle (26) d'un ensemble propulsif d'aéronef (10), cette manche (60) comportant un corps annulaire (50) et une lèvre annulaire (40) d'entrée d'air comportant deux parois annulaires coaxiales (41, 42), respectivement interne (41) et externe (42), la paroi interne (41) définissant une partie d'une surface annulaire interne de la manche d'entrée d'air (60) et la paroi externe (42) définissant une partie d'une surface annulaire externe de la manche d'entrée d'air (60), la manche d'entrée d'air (60) comportant en outre un système de commande (70) pour le déplacement en translation axiale de la lèvre (40) vis-à-vis dudit corps (50), depuis une première position dans laquelle la lèvre (40) est accolée audit corps (50) jusqu'à une seconde position dans laquelle la lèvre (40) est écartée axialement dudit corps (50), la manche (60) comportant en outre une rangée annulaire de grilles (90) qui sont solidaires en translation de la lèvre (40) et qui sont configurées pour être, dans ladite première position, logées dans ledit corps (50), et, dans ladite seconde position, sorties dudit corps (50) et destinées à être traversées par un flux d'air (100) entrant dans la manche d'entrée d'air (60),
la manche (60) comprenant au moins un système de guidage (80) en translation de la lèvre (40) vis-à-vis dudit corps (50), **caractérisée en ce que** le système de guidage (80) est du type à rail (83) et glissière (84),
le rail (83) étant situé sur le corps (50) et la glissière (84) étant située sur la lèvre (40), le rail (83) et la glissière (84) étant configurés pour guider la lèvre (40) parallèlement à un axe longitudinal (24) de la manche d'entrée d'air (60) lors de ses déplacements de la première position à la seconde position et vice-versa,
la glissière (84) étant ménagée dans les grilles (90) de façon à ce que le flux d'air (100) entre dans la nacelle en traversant les grilles (90) et/ou la glissière (84) lorsque la lèvre (40) est en seconde position, et
**en ce que** la glissière (84) comprend deux bords (85) espacés entre eux de manière à définir un espace (86), le rail (83) comprend deux profilés en forme de U agencés pour être logés dans l'espace (86) dans la première position et libérer l'espace (86) dans la seconde position, les bords (85) et les profilés (87) étant configurés pour autoriser le déplacement axial de la lèvre (40) par rapport au corps (50) et empêcher tout autre type de déplacement.

2. Manche (60) selon la revendication précédente, dans laquelle ledit système de commande (70) comprend au moins un vérin (71) orienté sensiblement parallèlement à un axe longitudinal (24) de la manche d'entrée d'air (60).

3. Manche (60) selon l'une des revendications précédentes, dans laquelle lesdites parois (41, 42) sont reliées entre elles par une paroi annulaire transversale de renfort (43).

4. Manche (60) selon la revendication 3, dans laquelle la paroi de renfort (43) définit avec les parois interne (41) et externe (42) un compartiment annulaire (44) de réception parcouru par une canalisation (45) de circulation d'un fluide de dégivrage de la lèvre (40).

5. Manche selon la revendication 1, dans laquelle la lèvre (40) est fixée de manière amovible au corps (50) par au moins une bride lorsque la lèvre (40) se trouve dans la première position.

6. Ensemble propulsif (10) d'aéronef, comportant une nacelle (26) équipée d'une manche (60) selon l'une des revendications précédentes.

## Patentansprüche

1. Lufteinlasshülse (60) für eine Gondel (26) einer Flugzeug-Antriebseinheit (10), wobei diese Hülse (60) einen ringförmigen Körper (50) und eine ringförmige Lufteinlasslippe (40) umfasst, die zwei koaxiale ringförmige Wände (41, 42), eine innere (41) bzw. eine äußere (42), umfasst, wobei die innere Wand (41) einen Teil einer inneren ringförmigen Fläche der Lufteinlasshülse (60) definiert und die äußere Wand (42) einen Teil einer äußeren ringförmigen Fläche der Lufteinlasshülse (60) definiert, wobei die Lufteinlasshülse (60) weiter ein Steuersystem (70) für die axiale Verschiebebewegung der Lippe (40) gegenüber dem Körper (50) von einer ersten Position, in der die Lippe (40) an den Körper (50) angefügt ist, bis zu einer zweiten Position, in der die Lippe (40) axial vom Körper (50) beabstandet ist, umfasst, wobei die Hülse (60) weiter eine ringförmige Reihe von Gittern (90) umfasst, die in der Translation mit der Lippe (40) integriert sind und die so konfiguriert sind, dass sie in der ersten Position im Körper (50) untergebracht und in der zweiten Position aus dem Körper (50) herausbewegt sind, und dazu bestimmt sind, von einem Luftstrom (100), der in die Lufteinlasshülse (60) eintritt, durchquert zu werden,
wobei die Hülse (60) mindestens ein System (80) zur Translationsführung der Lippe (40) gegenüber dem Körper (50) umfasst, **dadurch gekennzeichnet, dass** das Führungssystem (80) vom Typ mit Schiene (83) und Gleitstück (84) ist,
wobei sich die Schiene (83) am Körper (50) befindet und das Gleitstück (84) sich an der Lippe (40) befindet, wobei die Schiene (83) und das Gleitstück (84) so konfiguriert sind, dass sie die Lippe (40) bei ihren Bewegungen von der ersten Position in die zweite Position und umgekehrt parallel zu einer Längsachse (24) der Lufteinlasshülse (60) führen,
wobei das Gleitstück (84) in den Gittern (90) so ausgestaltet ist, dass der Luftstrom (100) in die Gondel eintritt, indem er die Gitter (90) und/oder das Gleitstück (84) durchquert, wenn sich die Lippe (40) in der zweiten Position befindet,
und dadurch, dass das Gleitstück (84) zwei Kanten (85) umfasst, die so voneinander beabstandet sind, dass sie einen Raum (86) definieren, die Schiene (83) zwei U-förmige Profile umfasst, die so angeordnet sind, dass sie in der ersten Position in dem Raum (86) untergebracht sind und in der zweiten Position den Raum (86) freigeben, wobei die Kanten (85) und die Profile (87) so konfiguriert sind, dass sie die axiale Bewegung der Lippe (40) in Bezug auf den Körper (50) ermöglichen und jede andere Art von Bewegung verhindern.

2. Hülse (60) nach dem vorstehenden Anspruch, wobei das Steuersystem (70) mindestens einen Zylinder (71) umfasst, der im Wesentlichen parallel zu einer Längsachse (24) der Lufteinlasshülse (60) ausgerichtet ist.

3. Hülse (60) nach einem der vorstehenden Ansprüche, wobei die Wände (41, 42) durch eine ringförmige, quer verlaufende Verstärkungswand (43) miteinander verbunden sind.

4. Hülse (60) nach Anspruch 3, wobei die Verstärkungswand (43) zusammen mit der Innen- (41) und der Außenwand (42) ein ringförmiges Aufnahmefach (44) definiert, das von einer Kanalisation (45) für die Zirkulation eines Enteisungsfluids für die Lippe (40) durchzogen ist.

5. Hülse nach Anspruch 1, wobei die Lippe (40) durch mindestens einen Flansch abnehmbar am Körper (50) befestigt ist, wenn sich die Lippe (40) in der ersten Position befindet.

6. Flugzeug-Antriebseinheit (10), die eine Gondel (26) umfasst, welche mit einer Hülse (60) nach einem der vorstehenden Ansprüche ausgestattet ist.

## Claims

1. An air inlet duct (60) for a nacelle (26) of an aircraft propulsion assembly (10), said duct (60) comprising an annular body (50) and an annular air inlet lip (40) comprising two coaxial annular walls (41, 42), respectively inner (41) and outer (42), the inner wall (41) defining a portion of an inner annular surface of the air inlet duct (60) and the outer wall (42) defining a portion of an outer annular surface of the air inlet duct (60), the air inlet duct (60) further comprising a control system (70) for moving the lip (40) in axial translation relative to said body (50), from a first position in which the lip (40) is joined to said body (50) to a second position in which the lip (40) is axially spaced apart from said body (50), the duct (60) further comprising an annular row of grilles (90) which are secured in translation with the lip (40) and which are configured so as to be, in said first position, housed in said body (50), and, in said second position, extended from said body (50) and intended to be traversed by an airflow (100) entering the air inlet duct (60),
the duct (60) comprising at least one guiding system (80) of the lip (40) in translation with respect to said body (50),
**characterized in that** the guiding system (80) is rail (83) and slide (84) type, the rail (83) being located on the body (50) and the slide (84) being located on the lip (40), the rail (83) and the slide (84) being configured to guide the lip (40) parallel to a longitudinal axis (24) of the air inlet duct (60) during its moves from the first position to the second position and vice versa,
the slide (84) being provided in the grilles (90) so that the air flow (100) enters the nacelle by passing through the grilles (90) and/or the slide (84) when the lip (40) is in second position,
and **in that** the slide (84) comprises two edges (85) spaced apart so as to define a gap (86), the rail (83) comprises two U-shaped profiles arranged to be accommodated in the gap (86) in the first position and to free the gap (86) in the second position, the edges (85) and the U-shaped profiles (87) being configured to allow an axial movement of the lip (40) relative to the body (50) and prevent any other type of movement.

2. The duct (60) according to the preceding claim, wherein said control system (70) comprises at least one actuator (71) oriented substantially parallel to a longitudinal axis (24) of the air inlet duct (60).

3. The duct (60) according to one of the preceding claims, wherein said walls (41, 42) are connected to each other by a transverse reinforcing annular wall (43).

4. The duct (60) according to claim 3, wherein the reinforcing wall (43) defines with the inner (41) and outer (42) walls an annular reception compartment (44) traversed by a circulation pipe (45) of a fluid for de-icing the lip (40).

5. The duct according to claim 1, wherein the lip (40) is removably attached to the body (50) by at least one flange when the lip (40) is in the first position.

6. An aircraft propulsion assembly (10) comprising a nacelle (26) equipped with a duct (60) according to one of the preceding claims.
